# EUROPEAN PATENT SPECIFICATION

(11) **EP 0 643 667 B1**
(45) Date of publication and mention of the grant of the patent: **10.04.1996**
(21) Application number: 93912510.0
(22) Date of filing: 07.06.1993
(51) Int. Cl.: B67D 1/12, B67D 1/00, B67D 1/06

(54) **BEVERAGE DISPENSING SYSTEM FOR A BAR**
GETRÄNKE-AUSGABEVORRICHTUNG FÜR EINE BAR
SYSTEME DE DISTRIBUTION DE BOISSONS POUR BAR

(30) Priority: 08.06.1992 US 894267; 08.06.1992 US 894269; 08.06.1992 US 895084
(43) Date of publication of application: 22.03.1995
(60) Divisional application: 95250160.9
(73) Proprietor: AZBAR INC., Ville Vanier, Québec G1M 3M2 (CA)
(72) Inventor: SIMARD, Gilbert, Beauport, Quebec G1C 5E6 (CA)
(74) Representative: Patentanwälte Wenzel & Kalkoff
(86) International application number: CA9300241
(87) International publication number: WO9325466

(56) References cited:
- DE-A- 2 815 610
- GB-A- 2 116 763
- US-A- 3 428 218
- US-A- 3 685 692
- US-A- 3 920 149

## Description

### Field of the Invention

The present invention relates to a system for controlling the dispensing of beverages in a bar.

### Background of the Invention

Bar control systems according to the preamble of claim 1 are known in the art. US patent 3,920,149 (Fortino et al.) describes a liquor bottle stopper and electromagnetic valve system which records use of up to seven different kinds of liquor. UK patent 2,116,763 describes a bar system in which consumption of various beverages are monitored and controlled by a central system. It is also known to provide apparatus which automatically prepare a mixed drink.

While these prior art systems can be used to effectively monitor beverage consumption in a bar for inventory and cost purposes or to prepare a mixed drink, they do not assist the bartender in his preparation of drinks, while allowing him to serve drinks of a variety of kinds from a variety of dispensers or containers.

For example, a bar may have a wine dispenser and a soda dispenser. Each dispenser may be metered to monitor consumption for inventory and cost purposes. When a customer requests a glass of wine or a glass of soda water, the dispensers are used directly by the bartender, and charged accordingly. However, when the customer wants a spritzer (wine and soda mix), a smaller quantity of wine is mixed with a smaller quantity of soda to make up the mixed drink. In the prior art systems, consumption of the beverages is monitored without regard to how the beverages are used to determine what revenue should be generated from the loss in inventory for each separate case (the cost per 28 g (ounce) for the wine is more in a spritzer than in a simple glass).

### Summary of the Invention

It is an object of the invention to provide a system for controlling the dispensing of beverages in a bar, which monitors consumption and estimates revenue from the consumption. It is another object of the invention to provide a system which works with a plurality of individually operated beverage dispensers for metering and dispensing a plurality of beverages, so that the bartender may dispense in the conventional manner any of the beverages to make up a drink.

According to the invention, there is provided a system for controlling the dispensing of beverages in a bar, comprising: a plurality of individual manually operated beverage dispensers for metering and dispensing a plurality of beverages upon command by a user ; characterised in that it comprises selecting means for selecting a preprogrammed beverage mix by the user; and control means for controlling the plurality of beverage dispensers to dispense preprogrammed quantities of beverage making up the selected preprogrammed beverage mix when the selecting means indicate that a mix has been selected; whereby the system allows the user to obtain quantities of beverages by use of the plurality of beverage dispensers without using the selecting means and to prepare a preprogrammed beverage mix by using the selecting means and the plurality of beverage dispensers.

Preferably, the system may further comprise calculating means for determining an estimated value of the beverages dispensed, based on metered quantities of the beverages dispensed and the state of the selection means, whereby a different value per volume of the beverages may be calculated for a given beverage making up the selected preprogrammed beverage mix. The calculating means may also function as a cash register, the selecting means providing a cash register input. A printer connected to the calculating means can provide cash register receipts.

### Brief Description of the Drawings

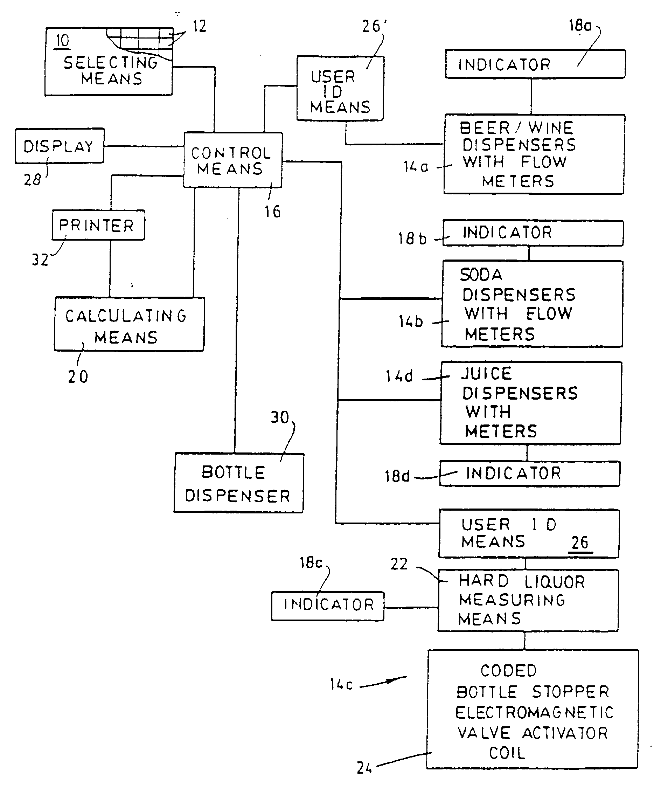

The drawing shows a block diagram of the system according to the preferred embodiment.

### Detailed Description of the Preferred Embodiment

In the preferred embodiment, the system for controlling the dispensing of beverages in a bar comprises a central control means (16) which cooperates with the plurality of individual manually operated beverage dispensers (14a), (14b) and (14c) for metering and dispensing a plurality of beverages upon command by a user. As dispensers (14) are used, the control means (16) are provided with information concerning how much of each beverage is dispensed. The beer and wine flow meters (14a) measure the amount of beer or wine dispensed from the various beer and wine taps of the bar system. Similarly, the soda flow meters (14b) are connected to each soda supply line for each kind of soda to measure dispensation. The hard liquor dispensers (14c) comprise hard liquor measuring means (22) and a coded bottle stopper electromagnetic valve activator coil (24). A coded bottle stopper electromagnetic valve system and activator coil are known in the art from US patent 3,920,149. Each bottle of hard liquor is provided with a bottle stopper having therein a magnetically activated valve which is normally closed to prevent pouring of the hard liquor. Coding means are also provided on the stopper to identify the bottle. An activator coil (24) is placed over the coded bottle stopper, and then the coil stopper and bottle are all inverted to pour the hard liquor. The measuring means (22) then cause the activator coil (24) to open the electromagnetic valve and do so for a predetermined period of time such that the predetermined quantity to be measured is poured from the bottle of hard liquor. Measuring means (22) feed back to control means (16) how much liquor has been poured from which bottle as identified by the coded stopper. As can be understood, the above-described system can be used to dispense beer, wine, soda and hard liquor at the bartender's command while the control means (16) can be used for measuring the quantities of beverages dispensed. The control means (16) can also be used to measure exact amounts of beer, wine and soda to be measured by adding to flow meters (14a) and (14b) solenoid valves which stop the flow of beer, wine and soda once a predetermined amount of beverage has been dispensed as measured by the flow meters.

In accordance with the invention, selecting means (10) are provided for selecting a beverage mix whose various component beverages dispensable from dispensers (14) are determined and measured for dispensation by control means (16) in collaboration with the dispensers (14). A given mixed drink may be selected by pressing one of keys (12) on a key pad of the selecting means (10). If the mixed beverage selected should be a wine spritzer, a preselected amount, such as 98g (3.5 ounces), of wine and soda respectively will be dispensed from dispensers (14a) and (14b). Selecting means (10) will inform control means (16) of the appropriate amounts to be dispensed and control means (16) will control dispensers (14a) and (14b) to carry out the appropriate dispensations. Meanwhile, indicators (18a) and (18b) will indicate that a preselected amount will be dispensed by dispensers (14a) and (14b) respectively, and that to dispense from the dispensers a different measurement would require resetting of the selecting means (10). In the preferred embodiment, the indicators (18a) (b) and (c) comprise LEDs fixed proximate the controls for each of the dispensers (14). Thus, in the case of a wine spritzer, the white wine tap of dispensers (14a) will be set to measure 98g (3.5 ounces) before stopping. Indicator (18a) fixed proximate the white wine tap will flash to indicate that a preprogammed amount will be dispensed. Once the appropriate amount of wine has been dispensed into a glass, the bartender then picks up the soda gun of dispensers (14b) to which an LED indicator (18b) is attached. The indicator (18b) would be flashing to indicate that a predetermined measured amount will be dispensed. The bartender presses the soda water button until the flow is stopped and the glass is filled. Once the predetermined amounts are dispensed from dispensers (14a) and (14b), the indicators (18a) and (18b) respectively will be reset to their normal state.

In another example, if a mixed drink such as a Harvey Wallbanger is selected using selecting means (10), the control means (16) will control dispensers (14c) to measure the correct amounts of vodka and Galiano (trademark) liquor to make up the mixed beverage with a remaining amount of orange juice. When the coil (24) is placed on top of the coded bottle stopper of either the Galiano or vodka bottles, the control means (16) recognize that one of the bottles for making up a selected mix is ready for use, and causes indicator (18c) to flash. Once the measuring means (22) determine that the selected quantities of each hard liquor has been dispensed, the activator coils are caused to close the electromagnetic valves and stop pouring. The glass containing the appropriately measured quantities of vodka and Galiano is then filled with orange juice either from a dispenser similar to dispensers (14a) and (14b) (not shown) or by pouring from an ordinary juice container. Calculating means (20) keep track of the total value of beverages dispensed for accounting purposes in the bar. As can be understood, in the case that a wine spritzer is sold at the same price as a glass of wine, the two drinks containing different amounts of wine, then the calculating means (20) will rely on information provided by the selecting means (10) to adjust the value per volume rates for the various beverages depending on its application.

In the preferred embodiment, there is also provided user identification means (26) and (26') which may optionally be implemented to prevent unauthorized dispensation of beverages and to identify which bartender has dispensed beverages. Once the user has identified himself by means (26) and (26'), control means (16) may pass this information on to calculating means (20) in order to keep separate tabs on the total value of beverages dispensed. The means (26) and (26') may comprise a key actuated switch or a security code entry keypad. In the case of a bar in which the bartender is responsible for his or her own cash, the calculating means will indicate whether each bartender has collected an amount of cash commensurate with the value of the beverages dispensed.

In the preferred embodiment, a display (28) is also provided which can be used to display a list of beverage ingredients making up the beverage mix selected by the selecting means (10) so that the bartender knows in advance what ingredients are required. Printer (32) may be used to print up bills and to produce reports on the value of beverages dispensed determined by the calculating means. Inventory control and inventory reports may also be generated by printer (32). A bottle dispenser (30) is also provided so that inventory and sales control for all beverages sold by the bar can be accounted for by the control means (16) and the calculating means (20).

The calculating means also act as a cash register in combination with the selecting means (10) and the printer (32). All items for sale at the bar (even snacks and cigarettes) are assigned a key (12) on the means (10), and the sale is displayed on display (28). When a receipt is required, printer (32) is used to print up the required detailed receipt.

## Claims

1. A system for controlling the dispensing of beverages in a bar, comprising:
a plurality of individual manually operated beverage dispensers (14) for metering and dispensing a plurality of beverages upon command by a user; characterised in that it comprises :
selecting means (10) for selecting a preprogrammed beverage mix by the user; and
control means (16) for controlling said plurality of beverage dispensers to dispense preprogrammed quantities of beverage making up the selected preprogrammed beverage mix when the selecting means indicate that a mix has been selected; whereby the system allows the user to obtain quantities of beverages by use of the plurality of beverage dispensers without using the selecting means and to prepare a preprogrammed beverage mix by using the selecting means and the plurality of beverage dispensers.

2. The system as defined in claim 1, further comprising a plurality of indicators (18) associated with said beverage dispensers (14) for indicating when the control means (16) have set the preprogrammed ones of the plurality of beverage dispensers to dispense preprogrammed quantities of beverage making up the selected preprogrammed beverage mix, such that the user is aware that the beverage dispensers whose indicators are active will dispense the preprogrammed quantity as controlled by the control means.

3. The system as defined in claim 1, further comprising calculating means (20) for determining an estimated value of the beverages dispensed, based on metered quantities of the beverages dispensed and the state of the selection means, whereby a different value per volume of the beverages may be calculated for a given beverage making up the selected preprogrammed beverage mix.

4. The system as defined in claim 2, wherein the indicators each comprise an LED.

5. The system as defined in claim 1, wherein the selecting means comprise a keypad having an input key (12) for each beverage mix.

6. The system as defined in claim 1, wherein the plurality of beverage dispensers (14) comprise coded electromagnetic valve bottle stoppers (24) and an activating coil means.

7. The system as defined in claim 6, wherein said control means comprise measuring means for selecting a predetermined quantity to be dispensed by said stoppers and activating coil means, whereby measured quantities of beverages can be dispensed without using the selection means.

8. The system as defined in claim 3, further comprising user identification means (26) for preventing unauthorized use of the beverage dispensers and for allowing the calculating means to determine the value of beverages dispensed for each of a plurality of users.

9. The system as defined in claim 1, wherein said control means function as a cash register, the selecting means providing to said control means details of an order of beverages.

10. The system as defined in claim 6, further comprising a magnet detection circuit for producing an output signal in response to a movement of a magnet, the control means producing a tamper alarm signal when said output signal is detected in the absence of said activator coil being energized.

## Patentansprüche

1. Ein System zum Kontrollieren der Ausgabe von Getränken in einer Bar bestehend aus:
- einer Vielzahl einzeln zu bedienender Getränkeausgabevorrichtungen zur Abmessung und Ausgabe einer Vielzahl von Getränken bei Anforderung durch den Benutzer;
**gekennzeichnet** durch
- Auswahlvorrichtungen (10) zur Auswahl einer vorprogrammierten Getränkemischung durch den Benutzer; und
- eine Kontrolleinheit (16) zur Kontrolle der Vielzahl von Getränkeausgabevorrichtungen zur Ausgabe vorprogrammierter Mengen von Getränken zum Herstellen eines ausgewählten vorprogrammierten Mixgetränkes, wenn die Auswahleinrichtungen anzeigen, daß ein Mixgetränk ausgewählt worden ist; wodurch das System dem Benutzer erlaubt, bestimmte Mengen von Getränken durch die Benutzung einer Vielzahl von Getränkeausgabevorrichtungen zu erhalten, ohne Benutzung der Auswahlvorrichtungen und ebenfalls erlaubt, ein vorprogrammiertes Getränkegemisch durch die Benutzung der Auswahlvorrichtung und der Vielzahl von Getränkeausgabevorrichtungen zu bereiten.

2. Das System, wie in Anspruch 1 definiert, weiterhin umfassend eine Vielzahl der den besagten Getränkeausgabevorrichtungen (14) zugeordneten Anzeigevorrichtungen (18) zum Anzeigen, wann die Kontrolleinheit (16) die Vorprogrammierten der Vielzahl der Getränkeausgabevorrichtungen zum Ausschenken vorprogrammierter Mengen von Getränken zur Herstellung des ausgewählten vorprogrammierten Mixgetränkes eingestellt hat, der art, daß der Benutzer davon unterrichtet wird, daß die Getränkeausgabevorrichtungen, deren Anzeigevorrichtungen blinken, die von der Kontrolleinheit angeforderte programmierte Menge ausschenken werden.

3. Das System, wie in Anspruch 1 definiert, weiterhin umfassend eine Recheneinheit (20) zur Bestimmung eines geschätzten Wertes der ausgegebenen Getränke basierend auf den abgemessenen Mengen der ausgegebenen Getränke und auf dem Stand der Auswahlvorrichtung, wobei unterschiedliche Werte pro Volumen der Getränke für ein gegebenes Getränk zur Herstellung des vorprogrammierten Getränkegemisches berechnet werden können.

4. Das System, wie in Anspruch 2 definiert, worin die Anzeigevorrichtungen jede eine Leuchtdiode umfassen.

5. Das System, wie in Anspruch 1 definiert, worin die Auswahlvorrichtungen ein Tastenfeld mit jeweils einer Eingabetaste für jedes Mixgetränk umfassen.

6. Das System, wie in Anspruch 1 definiert, worin die Vielzahl von Getränkeausgabevorrichtungen kodierte elektromagnetische Flaschenausflußstopper-Ventile (24) und eine Anregereinrichtung umfaßt.

7. Das System, wie in Anspruch 6 definiert, worin besagte Kontrolleinheit Abmeßvorrichtungen zur Auswahl einer durch die genannten Stopper und Anregerspulen auszuschenkende vorbestimmte Menge umfaßt, wodurch abgemessene Mengen von Getränken ohne Benutzung der Auswahlvorrichtungen ausgeschenkt werden können.

8. Das System, wie in Anspruch 3 definiert, weiter umfassend Benutzeridentifikationseinheiten (26) zum Unterbinden unbefugter Benutzung der Getränkeausgabevorrichtungen und zum Ermöglichen, daß die Recheneinheit den Wert der ausgeschenkten Getränke bei einer Vielzahl von Benutzern bestimmt.

9. Das System, wie in Anspruch 1 definiert, worin besagte Kontrolleinheit als Registrierkasse arbeitet, wobei die Auswahlvorrichtungen die Kontrolleinheit mit Einzelheiten einer Bestellung von Getränken versorgt.

10. Das System, wie in Anspruch 6 definiert, weiter eine Magnet-Ortungsschaltung zum Erzeugen eines Ausgangssignals als Reaktion auf eine Bewegung eines Magneten umfassend, wobei die Kontrolleinheit ein starkes Alarmsignal erzeugt, wenn besagtes Ausgangssignal in Abwesenheit besagter eingeschalteter Anregerspule registriert wird.

## Revendications

1. Un système pour contrôler la distribution de boissons dans un bar, comprenant:
une pluralité de distributeurs individuels de boissons (14) opérés manuellement pour mesurer et distribuer une pluralité de boissons sur consigne par un utilisateur;
**caractérisé en ce qu'il comprend:**
des moyens de sélection (10) pour sélectionner un mélange pré-programmé de boissons par l'utilisateur;
des moyens de contrôle (16) pour contrôler ladite pluralité de distributeurs de boissons afin de distribuer des quantités pré-programmées de boissons composant le mélange pré-programmé de boissons sélectionné lorsque les moyens de sélection indiquent qu'un mélange a été sélectionné; grâce auxquels le système permet à l'utilisateur d'obtenir des quantités de boissons en utilisant la pluralité de distributeurs de boissons sans utiliser les moyens de sélection et de préparer un mélange pré-programmé de boissons en utilisant les moyens de sélection et la pluralité de distributeurs de boissons.

2. Le système tel que défini dans la revendication 1, comprenant de plus une pluralité d'indicateurs (18) associés avec les distributeurs de boissons (14) pour indiquer quand les moyens de contrôle (16) ont réglé les distributeurs pré-programmés de la pluralité de distributeurs de boissons afin de distribuer des quantités pré-programmées de boissons composant le mélange pré-programmé de boissons sélectionné, de sorte que l'utilisateur soit informé que les distributeurs de boissons dont les indicateurs sont actifs distribueront la quantité pré-programmée telle que contrôlée par les moyens de contrôle.

3. Le système tel que défini dans la revendication 1, comprenant de plus des moyens de calcul (10) pour déterminer une valeur estimée des boissons distribuées, basée sur des quantités mesurées de boissons distribuées et l'état des moyens de sélection, grâce auxquels une valeur différente par volume des boissons peut être calculée pour une boisson donnée composant le mélange pré-programmé de boissons sélectionné.

4. Le système tel que défini dans la revendication 2, dans lequel les indicateurs comprennent chacun une DEL

5. Le système tel que défini dans la revendication 1, dans lequel les moyens de sélection comprennent un clavier ayant une touche d'entrée (12) pour chaque mélange de boissons.

6. Le système tel que défini dans la revendication 1, dans lequel la pluralité de distributeurs de boissons (14) comprennent des bouchons de bouteille à valve électromagnétique codée (24) et un moyen d'actionnement à bobine.

7. Le système tel que défini dans la revendication 6, dans lequel lesdits moyens de contrôle comprennent des moyens de mesure pour sélectionner une quantité prédéterminée devant être distribuée par lesdits bouchons et moyen d'actionnement à bobine, grâce auxquels des quantités mesurées de boissons peuvent être distribuées sans utiliser les moyens de sélection.

8. Le système tel que défini dans la revendication 3, comprenant de plus des moyens d'identification de l'utilisateur (26) pour empêcher une utilisation non-autorisée des distributeurs de boissons et pour permettre aux moyens de calcul de déterminer la valeur des boissons distribuées pour chacun d'une pluralité d'utilisateurs.

9. Le système tel que défini dans la revendication 1, dans lequel les moyens de contrôle fonctionnent comme une caisse enregistreuse, les moyens de sélection fournissant aux moyens de contrôle des détails d'une commande de boissons.

10. Le système tel que défini dans la revendication 6, comprenant de plus un circuit de détection à aimant pour produire un signal de sortie en réponse à un mouvement d'un aimant, les moyens de contrôle produisant un signal d'alarme de manipulation malhonnête lorsque ledit signal de sortie est détecté en l'absence de ladite bobine d'actionnement étant alimenté électriquement.
